# EUROPEAN PATENT APPLICATION

(11) **EP 2 568 322 A2**
(43) Date of publication of application: **13.03.2013**
(21) Application number: 12183550.8
(22) Date of filing: 07.09.2012
(51) Int. Cl.: G02B 6/126, H04N 13/04, H04N 9/31

(54) **3D-projection device with planar integrated optical circuit**

(30) Priority: 09.09.2011 US 201113228684
(71) Applicant: Octrolix BV, 7500 AH Enschede (NL)
(72) Inventor: Klein, Edwin Jan, 7521 WV Enschede (NL); Dekker, Ronald, 7522 AJ Enschede (NL)
(74) Representative: Williams, David John

(57) **Abstract**

An image projection system having a laser projector that projects two differently polarized images on a display region is disclosed. The laser projector enables viewing the two differently polarized images as a three-dimensional image. The image projection system includes a planar lightwave circuit-based beam combiner (212( that enables multiple colors of laser light (208-1-3, 201-1-3)having different polarization modes to be combined in a single output beam (226) that is scanned over the display region at video rates to produce the two polarized images.

## Description

### Cross Reference to Related Applications

This case is related to U.S. Patent Application Serial Number 13/208,806 (Applicant Docket: 142-018us), entitled "Beam Combiner," filed August 12, 2011, which claims the benefit of European Patent Application EP10008424.3, filed August 12, 2010, U.S. Provisional Application Serial Number 61/344,553, filed August 19, 2010 (Attorney Docket: 094111-0388630), U.S. Provisional Application Serial Number 61/376,483, filed August 24, 2010 (Attorney Docket: 094111-0388719), and U.S. Provisional Application Serial Number 61/477,960, filed April 21, 2011 (Attorney Docket: 142-017PROV). This case also claims the benefit of U.S. Patent Application 61/381185, filed September 9, 2010 (Attorney Docket: 094111-0389268). All of these cases are incorporated herein by reference

If there are any contradictions or inconsistencies in language between this application and one or more of the cases that have been incorporated by reference that might affect the interpretation of the claims in this case, the claims in this case should be interpreted to be consistent with the language in this case.

### Field of the Invention

The present invention relates to projectors in general, and, more particularly, to three-dimensional projectors.

### Background of the Invention

Systems for displaying images that appear three-dimensional ("3D") have been available for many years. Typically, in order to create a 3D image, two separate single color, two-dimensional images are projected onto a screen, which is viewed by a viewer wearing goggles or glasses having right and left color filters. The right filter passes the first color (*e.g.* red) of the image to the right eye while the left filter blocks the red light from reaching the left eye. Meanwhile, the left filter passes the other color (*e.g.*, blue) to the left eye while the right filter blocks the blue light from reaching the right eye. As a result, the viewer's eyes see different images, which the brain interprets as a single image having depth (*i.e.*, the third dimension).

An alternative technique for displaying a 3D image projects two separate images, each having a different polarization mode, on the screen. In this case, the viewer's glasses have polarization filters that enable slightly different images to reach the viewer's eyes. As with color-based projection systems, the viewer's brain interprets the different images as a single image having depth. Polarization-based 3D projection systems typically provide better color reproduction than color-based 3D projection systems; however, the polarization filters block as much as 50% of the light reaching each eye. As a result, the images are typically projected at high intensity to offset the loss.

Unfortunately, conventional 3D projection systems are typically large, expensive, and include optical systems that require complex alignment to attain and maintain quality images. As a result, an improved 3D projection system that is cheaper to make, smaller, optically efficient, and less complex is desirable.

### Summary of the Invention

The present invention enables a 3D projector without some of the costs and disadvantages of the prior art. Embodiments of the present invention include a beam combiner that is based on planar-lightwave circuit technology, which enables projectors that are smaller, cheaper, and more robust. In addition, some embodiments of the present invention enable control over the intensity of each individual light signal within the projected image via attenuators formed within the planar lightwave circuitry itself.

An illustrative embodiment of the present invention includes a light engine that is formed by hybrid integration of a plurality of light sources on a substrate that comprises a planar lightwave circuit-based beam combiner. The light sources provide a first plurality of TE-polarized light signals and a second plurality of TM-polarized light signals that are received by input ports of the beam combiner. The beam combiner includes a mixing region that has a plurality of directional couplers arranged in a tree arrangement, wherein the directional couplers are dimensioned and arranged to enable all of the light signals to be coupled onto the same output waveguide as a composite output signal. The output waveguide conveys the composite output signal to an output port, where it is collimated by a collimating lens to form an output beam. The output beam is received by a scanner, such as a MEMS-based two-axis scanning mirror, which scans the output beam over a display region.

Another embodiment of the present invention comprises a light engine that includes: a first plurality of light sources, each of which provides a light signal of a different color and that is TE-polarized; a second plurality of light sources, each of which provides a light signal of a different color and that is TM-polarized; and a beam combiner that is based on planar lightwave circuit technology, wherein all of the light sources are disposed directly on the beam combiner. The TE-polarized light signals are combined in a first mixing region to form a first multi-color composite output signal that is TE-polarized, while the TM-polarized light signals are combined in a second mixing region to form a second multi-color composite output signal that is TM-polarized. The two composite output signals are then combined in a third mixing region and provided as a third composite output signal at an output port of the beam combiner. This third composite output signal is then provided as an output signal, which is substantially collimated by a collimating lens to form an output beam. The output beam is scanned over a display region via a scanning mirror, which scans the beam at a video rate to generate a multi-color image having two differently polarized components. These components are suitable for viewing with eyewear having different polarization filters in the left and right lenses, as in a conventional 3D projection system.

In some embodiments, the first and second composite output signals are not combined in a third mixing region. Instead, each of the first and second composite output signals is provided at an output port having two waveguides and output facets. At the output port, the first and second composite output signals are collimated and provided as separate output beams that collectively define the output signal. The two output beams are substantially parallel and in close proximity; therefore, they appear as a single spot when scanned over the display region. In same of these embodiments, each of the two waveguides of the output port are characterized by an increased refractive-index contrast that increases their optical-mode confinement, thus mitigating optical cross talk between the waveguides. In some of these embodiments, a trench interposes the two waveguides of the output port to enhance the optical isolation between the waveguides.

In some embodiments, the beam combiner comprises a plurality of waveguides that do not define mixing regions. Instead, the waveguides receive the light signals having different colors and polarizations at a first end of the beam combiner where the waveguides have a relatively wide pitch to accommodate their optically coupling with individual light sources. The waveguides convey the independent light signals to a second end of the beam combiner where the waveguides have a relatively narrow pitch, preferably less than 10 microns. At the second end, each light signal is collimated independently to provide a separate output beam, which collectively define an output signal. Since the individual beams that compose the output signal are so close together, they blend to form a single pixel. This output signal is received by the scanner and scanned over the display region. In some embodiments, the timing of the emissions of the light sources is adjusted to accommodate delays that occur between the arrivals of the individual beams at each pixel in the display region.

In some embodiments, attenuators formed as part of the planar lightwave circuits control the ratio of the intensities of the light signals in the composite output signal. As a result, direct modulation of laser sources is avoided.

In some embodiments, each light signal received by the beam combiner is provided by a different light source. In some embodiments, each light signal of a different color is provided by a different light source and these light signals are split and converted to provide the two polarization modes of each color.

An embodiment of the present invention comprises a projector comprising: a beam combiner comprising a plurality of waveguides that are high-contrast surface waveguides, the plurality of waveguides being monolithically integrated, and the plurality of waveguides being arranged to define a first plurality of input ports that receive a first plurality of light signals having a first polarization, a second plurality of input ports that receive a second plurality of light signals that have a second polarization, a mixing region, and an output port, the output port providing an output signal comprising the first plurality of light signals and the second plurality of light signals; and a scanner that receives the output signal and scans it over a display region.

### Brief Description of the Drawings

FIG. 1 depicts a schematic diagram of a portion of a 3D projector in accordance with the prior art.

FIG. 2 depicts a schematic drawing of a 3D projector in accordance with an illustrative embodiment of the present invention.

FIG. 3 depicts operations of a method for projecting a 3D image in accordance with the illustrative embodiment.

FIG. 4 depicts a schematic drawing of a power controller in accordance with the illustrative embodiment of the present invention.

FIG. 5 depicts a schematic drawing of a mixing region in accordance with the illustrative embodiment of the present invention.

FIG. 6 depicts sub-operations suitable for use in operation **303** in accordance with the illustrative embodiment of the present invention.

FIG. 7 depicts a schematic drawing of a light engine in accordance with a first alternative embodiment of the present invention.

FIG. 8 depicts a schematic drawing of an output port in accordance with a second alternative embodiment of the present invention.

FIG. 9 depicts a schematic drawing of a light engine in accordance with a third alternative embodiment of the present invention.

FIG. 10 depicts a schematic drawing of an input stage of a light engine in accordance with a fourth alternative embodiment of the present invention.

FIG. 11 depicts a schematic drawing of an output port in accordance with a fifth alternative embodiment of the present invention.

FIG. 12 depicts a schematic drawing of a beam combiner in accordance with a sixth alternative embodiment of the present invention.

FIG. 13 depicts a schematic drawing of a beam combiner in accordance with a seventh alternative embodiment of the present invention.

### Detailed Description

The following terms are defined for use in this Specification, including the appended claims:
- **Planar lightwave circuit ("PLC")** is defined as an optical circuit that comprises one or more monolithically integrated surface waveguide structures that guide light in two dimensions, wherein the surface waveguides are arranged to provide at least one optical function.
- **High-contrast waveguide** is defined as a surface waveguide characterized by a large difference (≥ 10%) between the refractive index of its core material and the refractive index of its cladding material.

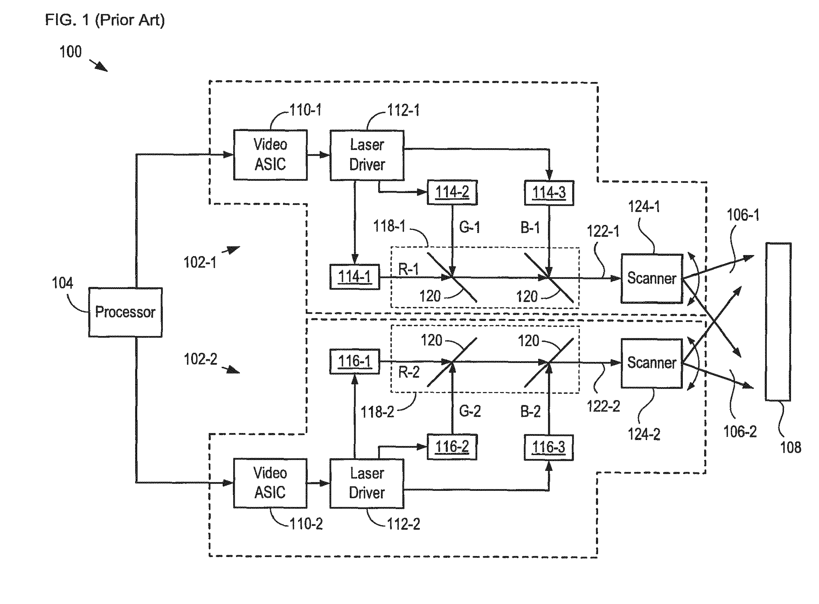

FIG. 1 depicts a schematic diagram of a portion of a 3D projector in accordance with the prior art. Projector **100** projects two distinct, substantially co-located, two-dimensional images onto display region **108,** wherein each of the images has a different polarization state. When viewed using glasses that include different polarization filters in each lens, the images appear to have depth, thereby adding a third dimension, as described in U.S. Patent Application Publication 2009/0079941, published March 26, 2009, which is incorporated herein by reference. Projector **100** comprises photonics modules **102-1** and **102-2** and processor **104**.

Processor **104** includes standard electronics for interfacing with a digital device, such as a cell phone, personal digital assistant (PDA), computer, game console or controller, and the like, to obtain image and/or video data. Processor **104** provides the data to each of photonics modules **102-1** and **102-2**. Photonics modules **102-1** and **102-2** project images **106-1** and **106-2** onto display region **108.** Images **106-1** and **106-2** are slightly different from one another to facilitate their interpretation as a 3D image.

Photonic module **102-1** includes video ASIC **110-1,** laser driver **112-1,** light sources **114-1, 114-2,** and **114-3,** beam combiner **118-1,** and scanner **124-1.**

Photonics module **102-2** includes video ASIC **110-2,** laser driver **112-2,** , light sources **116-1, 116-2,** and 1**16-3,** beam combiner **118-2,** and scanner **124-2.**

Photonics modules **102-1** and **102-2** are substantially identical, except for the polarization of the light in the image they project. Light sources **114-1, 114-2,** and **114-3** provided TE-polarized red, green, and blue light (designated as **R-1, G-1,** and **B-1**), respectively. Light sources **116-1, 116-2,** and **116-3** provided TM-polarized red, green, and blue light (designated as **R-2, G-2,** and **B-2),** respectively. In some prior-art projection systems, light sources 1**14-1, 114-2,** and **114-3** provide right-circular polarized light while light sources **116-1, 116-2,** and **116-3** provide left-circular polarized light.

In operation, at photonics module **102-1**, data from video ASIC **110-1** is converted into drive signals at laser driver **112-1** to drive light sources **114-1, 114-2,** and **114-3** at appropriate levels. Light sources **114-1, 114-2,** and **114-3** provide collimated beams of light to beam combiner **118-1.** Beam combiner **118-1** combines the individual collimated beams of light, via wavelength-selective fold mirrors **120,** into a composite output beam **122-1.**

In similar fashion, at photonics module **102-2,** data from video ASIC **110-2** is converted into drive signals at laser driver **112-2** to drive light sources **116-1, 116-2,** and **116-3** at appropriate levels. Light sources **116-1, 116-2,** and **116-3** provide collimated beams of light to beam combiner **118-2.** Beam combiner **118-2** combines the individual collimated beams of light, via wavelength-selective fold mirrors **120,** into a composite output beam **122-2.** Wavelength-selective fold mirrors are typically dichroic mirrors that reflect some wavelengths of light but transmit other wavelengths of light. They are oriented so that they redirect the reflected light signal onto the path of the transmitted light signal to combine the two light signals into a single free-space beam.

Composite output beam **122-1** is scanned across display region **108** by scanning mirror **124-1** to form two-dimensional TE-polarized image **106-1.** Simultaneously, scanning mirror **124-2** scans composite output beam **122-2** across the same region to form overlapping two-dimensional TM-polarized image **106-2.** The two overlapping images are viewed by a user through glasses or goggles whose lenses are selectively polarized, one lens being polarized for the TE mode and the other lens being polarized for the TM mode.

Unfortunately, projector systems based on free-space beam combiners are beset by several drawbacks. First, free-space beam combiners require optical elements that are relatively large and bulky and require mounting fixtures to attain and maintain their relative alignment. Resultant projector systems, therefore, become large, bulky, and expensive.

Second, free-space beam combiners convey light through a medium (*e.g.*, air, glass, *etc*.) that provides no light-guiding capability. As a result, the input light signals are typically individually collimated prior to their entry into the beam combiner to ensure that each beam has substantially the same cross-sectional shape when combined. Such collimating optics adds significant system cost and complexity.

Third, the assembly of the optical elements and light sources of a free-space beam combiner is typically highly labor intensive. The components must be carefully aligned in both position and angle to ensure that the constituent light signals are completely overlapping to avoid spectral non-uniformity through the cross-section of the composite output beam. In addition, angular misalignment of one or more of constituent light signals can lead to divergence of those light signals as they propagate through the beam combiner. The assembly of these optical elements becomes increasingly more difficult as additional light signals are included. Further, high-speed volume manufacture of free-space beam combiners is difficult in a cost-effective manner. Still further, the sources, mirrors, and lenses are normally aligned and positioned by mounting them in an optical fixture. Unfortunately, such fixtures are susceptible to temperature-induced misalignments (due to thermal expansion), as well as misalignments caused by shock and vibration that commonly occur through the lifetime of the projector.

Fourth, geometric distortion of the constituent light signals occurs at each turning mirror in the beam combiner due to a difference in their angle of incidence in the x- and y-directions with the mirrors. As a result, compensating optics are typically included in the beam combiner, further increasing cost, system complexity, and system size.

Fifth, conventional laser projectors rely on direct modulation of the laser sources to control the color of the composite output signal. Unfortunately, changing the drive current to a laser diode can lead to deleterious optical effects, such as wavelength chirping and mode hopping that manifest as unwanted visible artifacts in the projected image. In addition, some laser sources, such as frequency-doubled lasers or diode-pumped solid-state lasers, cannot be controlled using direct current drive modulation and, therefore, rely upon external modulators, such as acousto-optic modulators, to control their output. External modulation adds significant complexity and expense to such systems.

In contrast to projectors of the prior art, 3D projectors in accordance with the present invention employ beam combiners based on PLCs having directional couplers (a.k.a. filters) that enable highly efficient combining of multiple colors and multiple polarizations of light. Further, beam combiners in accordance with the present invention enable a single composite light signal to be formed by combining light signals of disparate irregularly spaced wavelengths over a wide wavelength range.

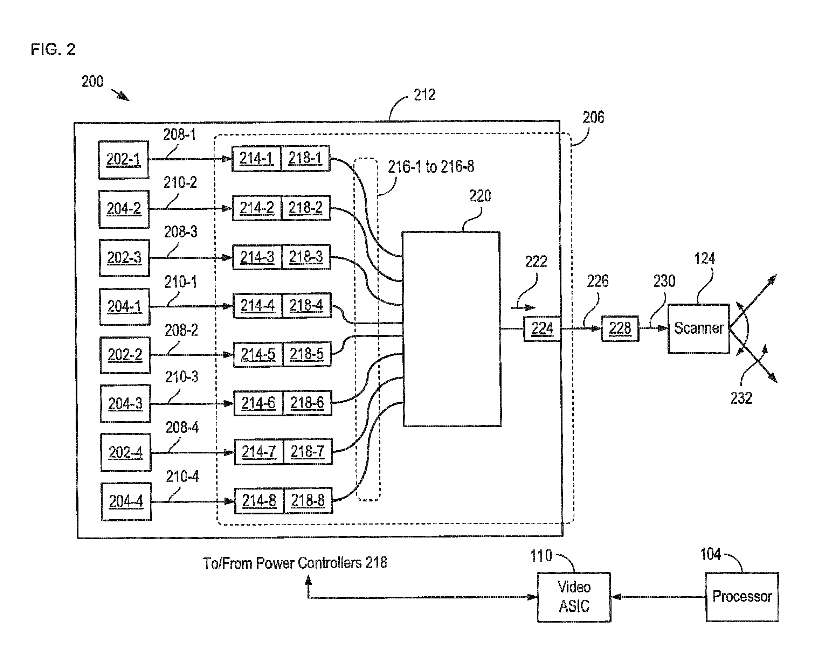

FIG. 2 depicts a schematic drawing of a 3D projector in accordance with an illustrative embodiment of the present invention. Projector **200** comprises light sources **202-1** through **202-4,** light sources **204-1** through **204-4,** beam combiner **206,** optics **228,** scanner **124,** processor **104,** and video ASIC **110.**

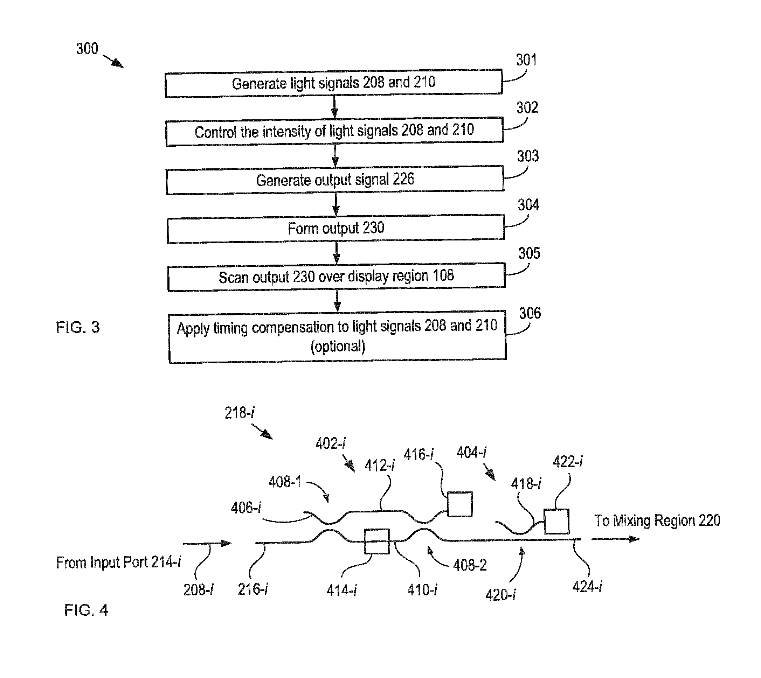

FIG. 3 depicts operations of a method for projecting a 3D image in accordance with the illustrative embodiment. Method **300** begins with operation **301,** wherein light sources **202-1** through **202-4** provide TE-polarized light signals and **204-1** through **204-4** and TM-polarized light signals to beam combiner **206.**

Light sources **202-1** through **202-4** (referred to, collectively, as light sources **202)** are laser diodes that are dimensioned and arranged to provide light signals **208-1, 208-2, 208-3,** and **208-4.** Light signals **208-1, 208-2, 208-3,** and **208-4** (referred to, collectively, as light signals **208)** are TE-polarized red, green, blue, and yellow light signals, respectively. Although a full-color image can be projected with just red, green, and blue light signals, yellow light is included in the illustrative embodiment to increase the sharpness of the projected image. In some embodiments, yellow light is not included. In some embodiments, one or more additional wavelengths are optionally included with the red, green, and blue light signals, such as yellow, near-IR, ultraviolet, and the like.

Light sources **204-1** through **204-4** (referred to, collectively, as light sources **204)** are laser diodes that are dimensioned and arranged to provide signals **210-1, 210-2, 210-3,** and **210-4.** Light signals **210-1, 210-2, 210-3,** and **210-4** (referred to, collectively, as light signals **210**) are TM-polarized red, green, blue, and yellow light signals, respectively.

At operation **302,** beam combiner **206** receives light signals **208** and **210** and adjusts their intensity based on input signals from video ASIC **110.**

Beam combiner **206** is a planar lightwave circuit, monolithically integrated on substrate **212,** which receives a plurality of light signals having a plurality of wavelengths and polarization modes and combines these light signals into a composite output signal. Beam combiner **206** comprises input ports **214-1** through **214-8,** waveguides **216-1** through **216-8,** power controllers **218-1** through **218-8,** mixing region **220,** and output port **224.**

Beam combiner **206** receives light signals **208** and **210** at input ports **214-1** through **214-8** (referred to, collectively, as input ports **214**), combines the light signals into composite output signal **222** in mixing region **220,** and provides composite output signal **222** at output port **224.**

It is an aspect of the present invention that beam combiners in accordance with the present invention are capable of combining many more wavelengths than are practical using beam combiners known in the prior art. Further, beam combiners in accordance with the present invention are capable of combining light signals having disparate and irregularly spaced wavelengths. One skilled in the art will recognize that prior-art beam combiners, such as free-space beam combiner **118,** fusion-spliced fiber couplers, and the like, are not well suited to combining more than three light signals. Further, other prior-art beam combiners, such as array-waveguide gratings, are not well suited to combining light signals having disparate and/or irregularly spaced wavelengths.

Substrate **212** is a conventional substrate suitable for supporting the formation of beam combiner **206.** Typical materials used for substrate **212** include, without limitation, silicon, glass, quartz, III-V semiconductors, II-VI semiconductors, ceramics, and the like.

Light sources **202** and **204** are mounted directly on substrate **212** and optically coupled directly with input ports **214.** As depicted in FIG. 2, beam combiner **206** can receive light signals **208** in any input pattern. It should be noted, however, that each input port is designed to enable it to optically couple its corresponding light signal with low loss, based on the optical mode of that light signal, its wavelength, and its polarization mode. For example, input port **214-1** is designed to receive light signal **208-1,** input port **214-4** is designed to receive light signal **210-1**, input port **214-7** is designed to receive light signal **208-4,** and so on.

In some embodiments, each of input ports **214** includes a mode-matching region having an input facet whose optical mode substantially matches the output mode of its respective light source. Each mode-matching region has a cross-section whose size is gently tapered so that its optical mode adiabatically transitions to the optical mode of the surface waveguide **216** to which it is optically coupled. As a result, the mode matching regions optically couple light sources **202** and **204** to waveguides **216-1** through **216-8** (referred to, collectively, as waveguides **216)** with low loss. Input ports **214** are in accordance with input ports described in detail in the parent application, U.S. Patent Application Serial Number 13/208,806. Input ports having mode-matching capability enable the hybrid integration of light sources **202** and **204** with beam combiner **206** to collectively define a "light engine" that can be smaller, cheaper, and more robust than photonics modules found in the prior art.

Each of waveguides **216** is based on a high-contrast surface waveguide structure having a core that comprises silicon nitride. Waveguides **216** are in accordance with high-contrast waveguide structures described in detail in U.S. Patent Application Serial Number 13/208,806. As discussed in the parent application, the use of such waveguides affords embodiments of the present invention several advantages. One skilled in the art will recognize, after reading this Specification, that other waveguide technologies can be used to form waveguides **216,** such as, without limitation, silica waveguides, silicon oxynitride waveguides, tantalum oxide waveguides, lithium niobate waveguides, and the like.

First, such waveguides are characterized by strong optical mode confinement. As a result, they can include curved sections that have small bend radii and can be routed in densely packed arrangements. Planar lightwave circuits based on waveguide **216,** therefore, can provide a high degree of functionality in a much smaller footprint than conventional low-index waveguide-based planar lightwave circuits.

Second, waveguide structures in accordance with the present invention do not require dopant diffusion to achieve their guiding capability. The use of undoped materials, such as stoichiometric silicon nitride and stoichiometric silicon dioxide, enables higher power handling than waveguides that are doped to control refractive index of one or more of their core and cladding. Further, the use of undoped materials also enables low-loss propagation of light having shorter wavelengths than is possible with conventional doped waveguide structures.

Third, waveguides such as waveguides **216** enable beam combiners that can operate over an extremely broad wavelength range (*e.g.*, within the range of approximately 400 nm to approximately 2000 nm).

Each of input ports **214** is coupled with its respective waveguide **216** via one of power controllers **218-1** through **218-8** (referred to, collectively, as power controllers **218**). Like input ports **214,** each of power controllers **218** is specifically designed to operate on its corresponding light signal. Power controllers **218** control the intensity of each of light signals **208** and **210,** based on control signals from video ASIC **110,** to control the color of output signal **230** at each pixel in display region **108**. In some embodiments, power controllers **218** are not included in beam combiner **220** and the ratio of light signals **208** and **210** in output signal **226** is controlled by directly modulating the drive currents to light sources **202** and **204.**

FIG. 4 depicts a schematic drawing of a power controller in accordance with the illustrative embodiment of the present invention. Power controller **218*-i*** comprises attenuator **402-*i*** and power monitor **404-*i*.** In response to control signals from video ASIC **110** and the output of power monitor **404-*i*,** power controller **218-*i*** diverts optical power (via attenuator **402-*i***) from waveguide **216-*i*** to a light dump in order to control the amount of optical power of light signal **208-*i*** (or, alternatively, **210-*i***) that reaches mixing region **220.**

Attenuator **402-*i*** comprises waveguide **216-*i*** and waveguide **408-*i***, which are arranged to define directional couplers **408-1** and **408-2.**

Directional couplers **408-1** and **408-2** are substantially identical directional couplers arranged in series and interposed by waveguide portions **410-*i*** and **412-*i*.** Waveguide portion **410-*i*** is a first portion of waveguide **216-*i*.** Waveguide portion **412-*i*** is optically coupled with light dump **416-*i*.** It will be clear to one skilled in the art how to specify, make, and use light dump **416-*i*.**

Modulator **414-*i*** comprises a heater strip for thermally inducing a phase shift in the light that propagates through waveguide portion **410-*i*.** This phase shift determines the amount of optical coupling occurs between waveguide portions **410-*i*** and **412-*i.*** This optical coupling, in turn, dictates how much of the optical power of light signal **208-*i*** is diverted into waveguide portion **412-*i*** and lost at light dump **416-*i*.** The remainder of light signal **208-*i*** continues propagating in waveguide **216-*i*** to output **424-*i*,** which is optically coupled with mixing region **220.**

Although the illustrative embodiment comprises modulators that operate on a thermo-optic effect, it will be clear to one skilled in the art, after reading this Specification, how to specify, make, and use alternative embodiments of the present invention that comprise modulators that induce a phase shift in light propagating in a waveguide based on a different effect, such as electro-optic, opto-mechanical, *etc.*

Power monitor **404-*i*** comprises waveguide **216-*i*,** waveguide **418-*i*,** and photodetector **422-*i*.** Waveguide **216-*i*** and waveguide **418-*i*** are arranged to define directional coupler **420-*i.***

Directional coupler **420-*i*** enables a small percentage of its optical power to be coupled from waveguide **216-*i*** into waveguide portion **418-*i*.**

Waveguide portion **418-*i*** is optically coupled with conventional photodetector **422-*i*** (*e.g.*, photodiode, avalanche photodiode, CCD sensor element, *etc*.), which is electrically coupled with processor **104** to provide the processor with a feedback signal suitable for controlling attenuator **402-*i***.

It is an aspect of the present invention that the use of power controllers **218-1** through **218-8** obviates the need to vary the drive current to each of light sources **202** and **204** to control the color of output **230**. As a result, embodiments of the present invention can avoid undesirable optical effects in the composite output signal, such as wavelength chirping, accelerated degradation, mode hopping, and the like. The use of power controllers **218** also enables the use of laser sources, such as frequency-doubled lasers or diode-pumped solid-state lasers, without a need for their customary external modulators. Further, since the attenuators are easily integrated in the PLC design, their inclusion adds little or no additional size to the overall system.

Power controllers **218** pass their respective light signals, at their specified intensities, to mixing region **220**, wherein light signals **208** and **210** are combined to form composite output signal **222**.

At operation **303**, light signals **208** and **210** are combined in mixing region **220**.

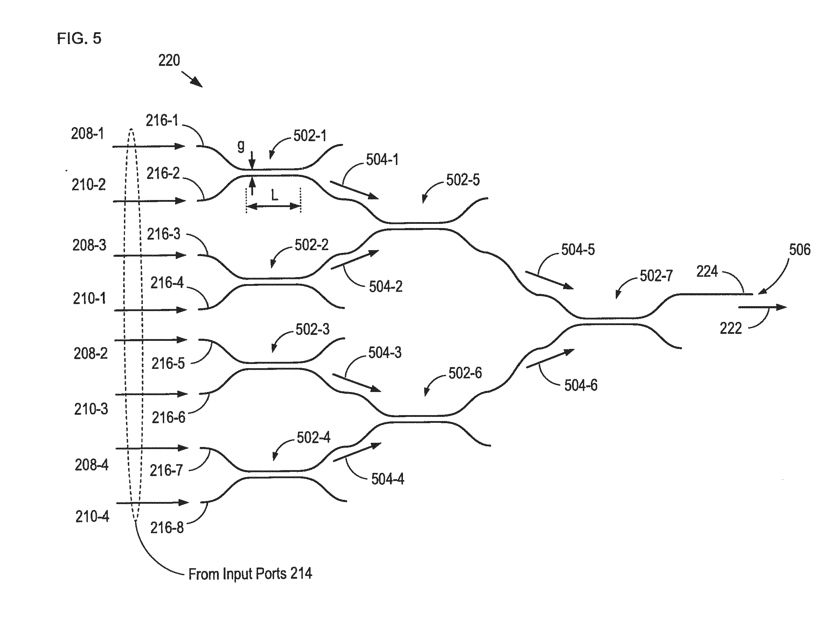

FIG. 5 depicts a schematic drawing of a mixing region in accordance with the illustrative embodiment of the present invention. Mixing region **220** comprises waveguides **216-1** through **216-8,** which are arranged to collectively define directional couplers **502-1** through **502-7** and output port **224.**

Each of directional couplers **502-1** through **502-7** (referred to, collectively, as directional couplers **502)** is a symmetric coupler (*i.e.*, the portions of the first and second waveguides that define the directional coupler along coupling length, **L,** have substantially the same width) that is characterized by wavelength-dependent power coupling that varies slowly with wavelength. One skilled in the art will recognize that each directional coupler **502** is designed for operation at the specific wavelengths it conveys and couples. The spacing, **g,** between the first and second waveguides along coupling length, **L,** the characteristics of the waveguides themselves, and the length, **L,** of the coupling region, determine the coupling characteristics of the directional coupler. These parameters are carefully chosen to enable substantially all of the optical energy of a first light signal in the first waveguide to optically couple from that waveguide into the second waveguide along coupling length **L,** but substantially none of the optical energy of a second light signal in the second waveguide to optically couple from that waveguide into the first waveguide. As a result, the directional coupler provides both light signals, combined as a composite output signal, on the second waveguide. Details of directional couplers in accordance with the present invention are disclosed in U.S. Patent Application Serial Number 13/208,806.

In the illustrative embodiment, light signals **208** and **210** are combined to form composite output signal **222.**

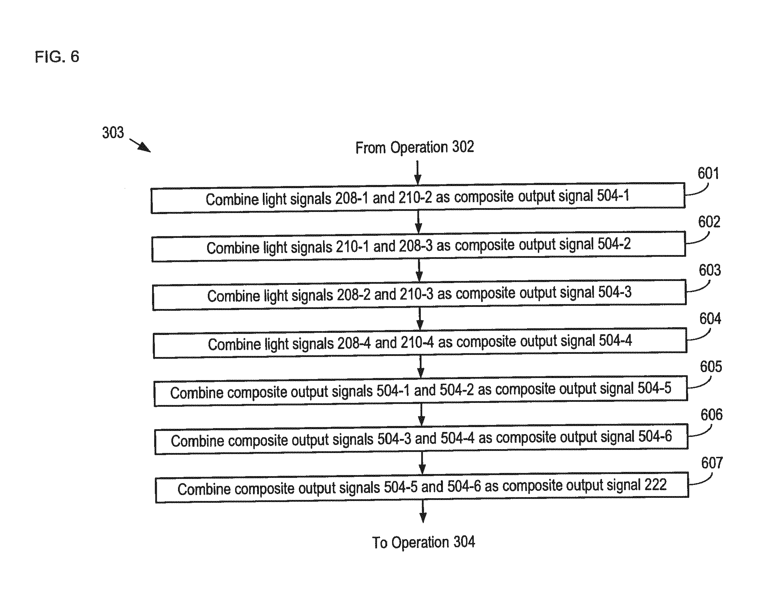

FIG. 6 depicts sub-operations suitable for use in operation **303** in accordance with the illustrative embodiment of the present invention. Operation **303** begins with sub-operation **601,** wherein, at directional coupler **502-1,** all of the optical energy of light signal **208-1** is coupled from waveguide **216-1** into waveguide **216-2,** while all of the optical energy of light signal **210-2** remains in waveguide **216-2.** The combined light signals are then provided to directional coupler **502-5** as composite output signal **504-1.**

At sub-operation **602,** at directional coupler **502-2,** all of the optical energy of light signal **210-1** is coupled from waveguide **216-4** into waveguide **216-3,** while all of the optical energy of light signal **208-3** remains in waveguide **216-3.** The combined light signals are then provided to directional coupler **502-5** as composite output signal **504-2.**

At sub-operation **603,** at directional coupler **502-3,** all of the optical energy of light signal **208-2** is coupled from waveguide **216-5** into waveguide **216-6,** while all of the optical energy of light signal **210-3** remains in waveguide **216-6.** The combined light signals are then provided to directional coupler **502-6** as composite output signal **504-3.**

At sub-operation **604**, at directional coupler **502-4,** all of the optical energy of light signal **210-4** is coupled from waveguide **216-8** into waveguide **216-7,** while all of the optical energy of light signal **208-4** remains in waveguide **216-7.** The combined light signals are then provided to directional coupler **502-6** as composite output signal **504-4.**

At sub-operation **605,** at directional coupler **502-5,** all of the optical energy of composite output signal **504-1** is coupled from waveguide **216-2** into waveguide **216-3,** while all of the optical energy of composite output signal **504-2** remains in waveguide **216-3.** The combined signals are then provided to directional coupler **502-7** as composite output signal **504-5.**

At sub-operation **606,** at directional coupler **502-6,** all of the optical energy of composite output signal **504-4** is coupled from waveguide **216-7** into waveguide **216-6,** while all of the optical energy of composite output signal **504-3** remains in waveguide **216-6.** The combined signals are then provided to directional coupler **502-7** as composite output signal **504-6.**

At sub-operation **607,** at directional coupler **502-7,** all of the optical energy of composite output signal **504-6** is coupled from waveguide **216-6** into waveguide **216-3,** while all of the optical energy of composite output signal **504-5** remains in waveguide **216-3.** The combined signals are then provided to output port **224** as composite output signal **222.** Output port **224** is the end portion of waveguide **216-3** that includes output facet **506.**

Returning now to FIGS. 2 and 3, at operation **304,** output **230** is generated. In order to generate output **230,** composite output signal **222** is first launched into free-space at output port **224** as output signal **226.**

Output signal **226** is captured and collimated by optics **228** to generate output **230** as a substantially collimated light beam. Optics **228** is typically a collimating refractive lens; however, in some embodiments, optics **228** comprises a different optical element, such as a diffractive lens, cylindrical lens, and the like. In some embodiments, optics **228** is disposed directly on substrate **212** and output signal **226** is not launched into free-space prior to its being converted into output **230.** In some embodiments, output port **224** comprises a mode-matching region for matching the output mode of output port **224** to the input mode (*e.g.*, aperture) of optics **228.**

In some embodiments, optics **228** includes a polarization converter (*e.g.*, a quarter-wave plate) that converts linearly polarized light to circularly polarized light. With linearly polarized 3D images, the illusion of three-dimensionality is lost when a user tilts his or head. Images projected using circularly polarized light, however, enable the viewer to tilt his or her head without losing the 3D effect.

At operation **305,** scanner **124** scans output **230** over display region **108** at video rates to form image **232.** It should be noted that, in contrast to images **106-1** and **106-2,** image **232** is a single image that contains image data in each polarization state. As a result, projector **200** requires no complicated optical alignment and/or calibration to ensure image alignment. Further, since image **232** is a collimated laser beam, it is always in focus - even when projected on a non-flat surface.

Although the illustrative embodiment comprises a projector that provides images that are linearly polarized, it will be clear to one skilled in the art, after reading this specification, how to specify, make, and use alternative embodiments of the present invention that operate with light having other polarization modes, such as circularly polarized light signals.

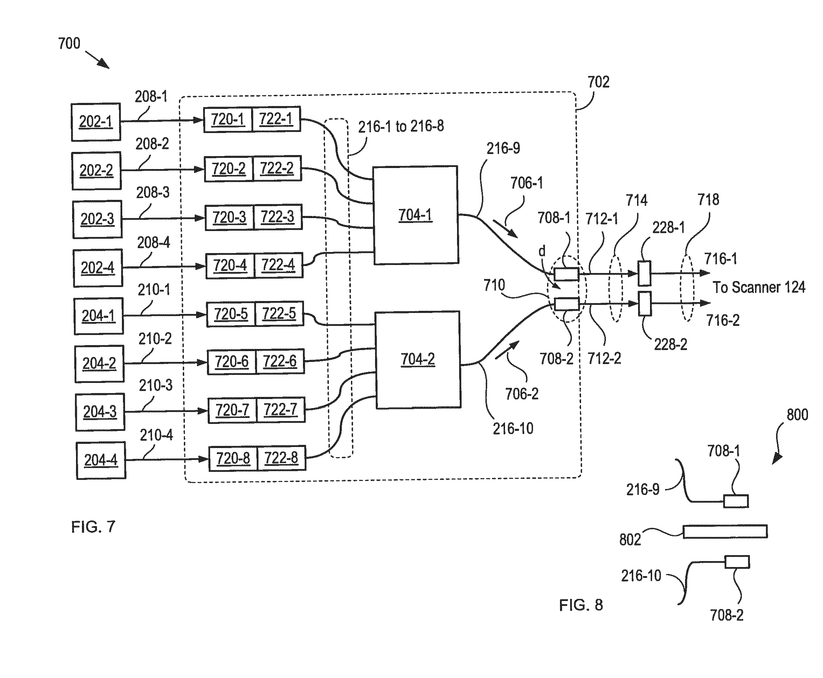

FIG. 7 depicts a schematic drawing of a light engine in accordance with a first alternative embodiment of the present invention. Light engine **700** comprises light sources **202** and **204** and beam combiner **702.**

Beam combiner **702** comprises input ports **720,** waveguides **216,** power controllers **722,** mixing regions **704-1** and **704-2,** and output port **710.** Beam combiner **702** is analogous to beam combiner **206;** however, beam combiner **702** includes two distinct mixing regions that separately combine the light signals of the different polarizations.

Input ports **720** and power controllers **722** are analogous to input ports **214** and power controllers **218,** respectively. As described above, and with respect to FIG. 2, the input ports and power controllers are specifically designed for their corresponding light signals, based on the optical mode, wavelength, and polarization of each light signal.

Mixing region **704-1** comprises three directional couplers arranged in a tree structure, in analogous fashion to mixing region **220** described above, to combine TE-polarized light signals **208-1** through **208-4** into TE-polarized composite output signal **706-1** on waveguide **216-9.** In similar fashion, mixing region **704-2** comprises three directional couplers arranged in a tree structure to combine TM-polarized light signals **210-1** through **210-4** into TM-polarized composite output signal **706-2** on waveguide **216-10.**

Waveguide **216-9** conveys composite output signal **706-1** to output port **708-1.** Waveguide **216-10** conveys composite output signal **706-2** to output port **708-2.** Output ports **708-1** and **708-2** collectively define output port **710,** which is analogous to output port **224.**

At output port **710,** each of composite output signals **706-1** and **706-2** is launched into free-space as output signals **712-1** and **712-2,** which collectively define output signal **714,** which is analogous to output signal **226.**

Output signals **712-1** and **712-2** are substantially collimated at optics **228-1** and **228-2** to provide output beams **716-1** and **716-2,** which collectively define output **718,** which is analogous to output **230.**

In similar fashion to the operation of projector **200,** described above and with respect to FIGS. 2-6, scanner **124** receives output **718** and scans it over display region **108.** In contrast to projector **200,** however, a projector comprising beam combiner **700** generates two separately polarized images on display region **108.** To mitigate image blur, ghosting, and other undesirable optical effects, output ports **708-1** and **708-2** are formed such that they are separated by distance, **d,** wherein **d** is preferably within the range of approximately 5 microns to approximately 200 microns, and more preferably within the range of approximately 7 microns to approximately 20 microns. It should be noted, however, that separation distance, **d,** is a function of the scan rate of scanner **124,** the design of optics **228,** and the anticipated separation distance between optics **228** and display region **108.**

Unfortunately, by locating output ports **708-1** and **708-2** in close proximity, optical cross talk between waveguides **216-9** and **216-10** can become possible. As a result, in some embodiments, the refractive-index contrast of waveguides **216-9** and **216-10** (and/or output ports **708-1** and **708-2)** is locally increased (by, for example, tapering the cross-sections of the waveguides) so that the optical modes of composite output signals **706-1** and **706-2** is more tightly confined within the waveguides.

FIG. 8 depicts a schematic drawing of an output port in accordance with a second alternative embodiment of the present invention. Output port **800** comprises waveguides **216-9** and **216-10,** output ports **708-1** and **708-2,** and trench **802.**

Trench **802** is a narrow trench, typically having a width of 3 microns or less and a depth of approximately 10 microns. Trench **802** is formed between output ports **708-1** and **708-2** to further increase the optical mode confinement in waveguides **216-9** and **216-10,** thereby decreasing the risk of optical cross talk between the waveguides.

Returning now to FIG. 7, in some embodiments, the separation between output ports **708-1** and **708-2** is larger than 10 microns to mitigate cross talk between the waveguides. In such embodiments, however, there is typically a discernable distance between the projected images formed by scanned output beams **716-1** and **716-2** due to the relative position of the different output beams on scanner **124,** the timing of the projection of each polarized output signal, and the scan rate of scanner **124.** As a result, undesirable optical effects, such as smearing, ghosting, *etc.*, impair the perceived 3D image. In fact, these undesirable optical effects can arise in any of the embodiments of the present invention wherein the output comprises more than one output beam, such as output **718,** but are particularly prominent for embodiments wherein output ports are separated by large distances (*e.g.,* >100 microns).

As a result, in some embodiments having an output that includes more than one output beam, method **300** continues with optional operation **306,** wherein the timing of the control signals that control the intensities of each of light signals **208** and **210** is adjusted to effect a delay or advance in one polarization output signal to improve the overlap of the two polarized signals directed at each pixel in the display region. The timing is adjusted based on the scan rate of scanner **124** to substantially co-locate the two polarized images on display region **108.** For example, if the scan rate of scanner **124** results in output **716-2** "trailing" output **716-1** across display region **108** by 10 microseconds, the data signals used to control the intensities of light signals **208** can be adjusted by 10 microseconds to correct this displacement. It should be noted that the trailing time between the polarized images depends primarily on the scan rate of scanner **124** and separation distance, **d** (*i.e.*, it is independent of the distance between the projector and display region **108**). It should be noted that optional operation **306** enables separation distance, **d**, to be of any practical size - even up to several hundreds of microns.

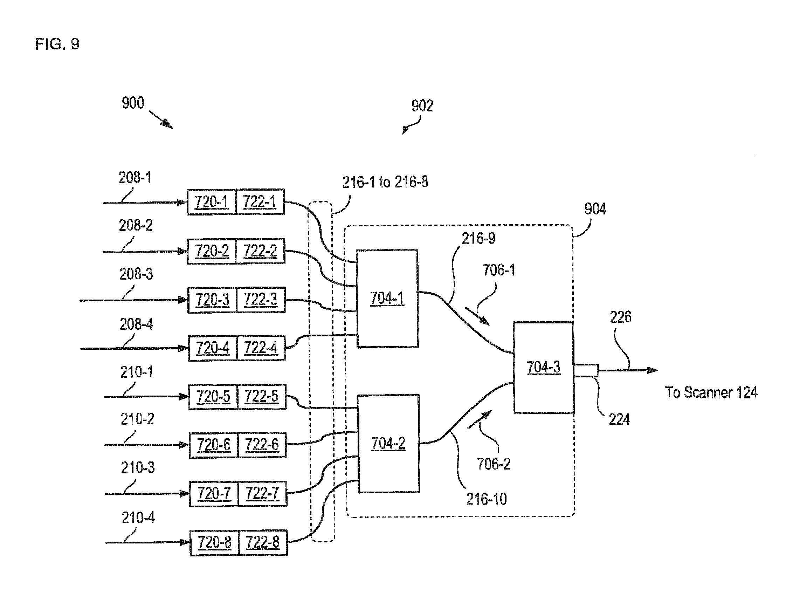

FIG. 9 depicts a schematic drawing of a light engine in accordance with a third alternative embodiment of the present invention. Light engine **900** comprises light sources **202** and **204** and beam combiner **902.**

Beam combiner **902** comprises input ports **720,** waveguides **216,** power controllers **722,** mixing region **904,** and output port **224.** Beam combiner **902** is analogous to beam combiner **702;** however, beam combiner **902** includes a third mixing region that combines the oppositely polarized output signals of mixing regions **704-1** and **704-2** into a composite output signal that includes both polarizations.

Mixing region **704-3** comprises a directional coupler that is dimensioned and arranged to combine TE-polarized composite output signal **706-1** and TM-polarized composite output signal **706-2** into composite output signal **222** at output port **224.**

In some embodiments, input ports **720,** waveguides **216,** power controllers **722,** mixing regions **704-1, 704-2,** and **704-3,** and output port **710** are monolithically integrated. In some embodiments, at least one of mixing regions **704-1, 704-2,** and **704-3** is formed on a separate substrate and optically coupled with the other mixing regions via optical fibers or through free-space. In some of these embodiments, light sources **202** are mounted on the same substrate that comprises mixing region **704-1** and light sources **204** are mounted on the same substrate that comprises mixing region **704-2.**

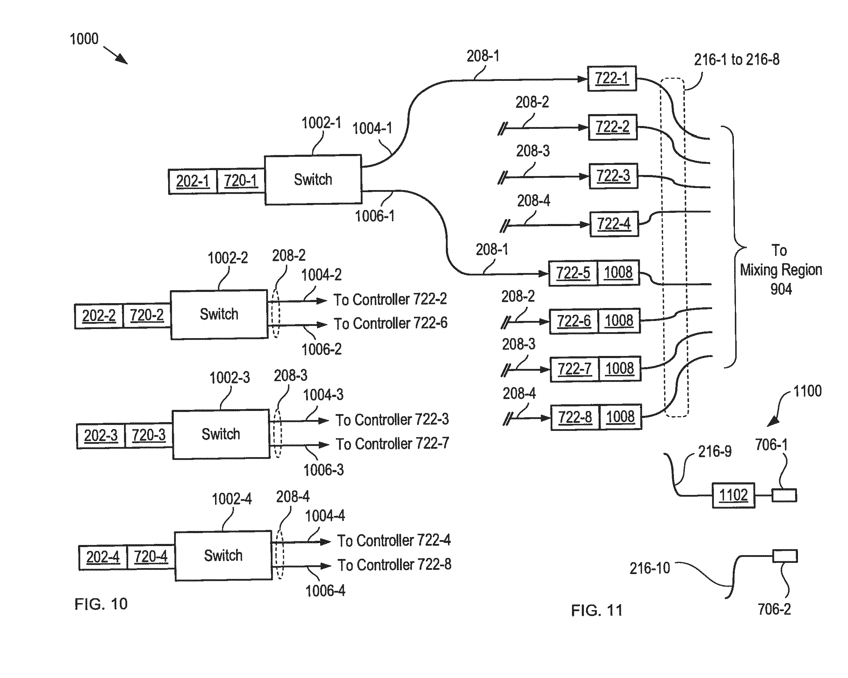

FIG. 10 depicts a schematic drawing of an input stage of a light engine in accordance with a fourth alternative embodiment of the present invention. Input stage **1000** comprises light sources **202-1** through **202-4,** input ports **720-1** through **720-4,** power controllers **722,** switches **1002-1** through **1002-4,** and polarization rotators **1008.** Although input stage **1000** is depicted as being operatively coupled with light engine **900,** it will be clear to one skilled in the art, after reading this specification, that input stage **1000** is suitable for use with any embodiment of the present invention.

Switches **1002-1** through **1002-4** (referred to, collectively, as switches **1002)** are active PLC-based switches that enable the optical power of an input light signal to be switched to either of their respective outputs **1004** and **1006.** Switches **1002** control to which output their respective light signals are directed based on control signals from either of processor **104** or video ASIC **110** (not shown for clarity). For example, switch **1002-3** is dimensioned and arranged to receive light signal **208-3** from input port **720-3** and switch the light signal to one of outputs **1004-3** and **1006-3.** PLC-based switches suitable for use with the present invention are disclosed in U.S. Patent Application Serial Number 13/208,806. In some embodiments at least one of switches **1002** comprises a different optical element, such as an asymmetric y-junction switch, a microring resonator, a Mach-Zehnder interferometer-based switch, *etc.*

Polarization rotators **1008** are conventional elements that enable the polarization mode of a light signal to be switched to its opposite sense (*e.g.*, between TE and TM or between right-circular and left-circular, *etc.*). In some embodiments, polarization rotators **1008** are half-wave plates inserted into slots formed at right angles (or slightly displaced from right angles to reduce back-reflection) to waveguides **216-5** through **216-8.** One skilled in the art will recognize that there are many ways to effect a polarization rotator suitable for use with embodiments of the present invention, such as those disclosed in: "Surface Plasmon induced polarization rotation and optical vorticity in a single mode waveguide," Optics Express, Vol. 15, No. 15, July 23, 2007, pp. 9476-9485; "Integrated polarization rotator made of periodic asymmetric buried Ta2O5/silica sol-gel waveguides," Optics Express, Vol. 15, No. 19, Sept. 17, 2007, pp. 12436-12442; and "Polarization rotation in asymmetric periodic loaded rib waveguides," Applied Physics Letters, Vol. 59, No. 11, Sept. 9, 1991, pp. 1278-1280, each of which is incorporated herein by reference.

In operation, switches **1002** direct all of the optical power in light signals **208-1** through **208-4** to power controllers **722-1, 722-2, 722-3,** and **722-4** during the first half of a timeslot allocated for illumination of an image pixel. The power controllers control the intensity of each of the light signals in response to control signals from one of processor **104** or video ASIC **110** (not shown for clarity). The light signals are then combined in mixing region **704-1,** passed through by mixing region **704-3,** and projected to illuminate the image pixel with a full color, TE-polarized light beam. During the second half of the timeslot, switches **1002** direct all of light signals **208-1** through **208-4** to power controllers **722-5, 722-6, 722-7,** and **722-8,** which control the intensity of the light signals in response to control signals from one of processor **104** or video ASIC **110.** These light signals are then combined in mixing region **704-2,** passed through by mixing region **704-3,** and projected to illuminate the image pixel with a full color, TM-polarized light beam.

The inclusion of switches **1002** and polarization rotators **1008** enable the projection of dual images having different polarizations with only one set of light sources. Laser cost is a significant factor in the overall system cost for a 3D projector. By eliminating the need for half of the light sources, therefore, system cost is dramatically reduced. In some embodiments, the control signals provided to the power controllers are delayed for one polarization due to the scan-rate induced optical effects discussed above.

In some embodiments, switches **1002** are replaced by passive 3 dB splitters that distribute the optical power in light signals **208-1** through **208-4** to their respective pairs of power controllers **722.** Although this reduces the intensity of each of the projected polarized images by approximately half, it enables the two polarized images to be projected at the same time.

FIG. 11 depicts a schematic drawing of an output port in accordance with a fifth alternative embodiment of the present invention. Output port **1100** comprises waveguides **216-9** and **216-10,** output ports **706-1** and **706-2,** and polarization rotator **1102.**

Polarization rotator **1102** is a substantially achromatic conventional polarization rotator, such as a half-wave plate, suitable for operation with all of light signals **208.**

By including polarization rotator **1102** in output port **1100,** polarization rotators **1008** in input stage **1000** described above and with respect to FIG. 10 are obviated. Further, locating the polarization rotator after mixing region **904** enables the use of identical layouts for mixing regions **704-1** and **704-2**. Still further, it relieves some of the design complexity for mixing region **704-3,** since this mixing region must only combine light signals of a single polarization.

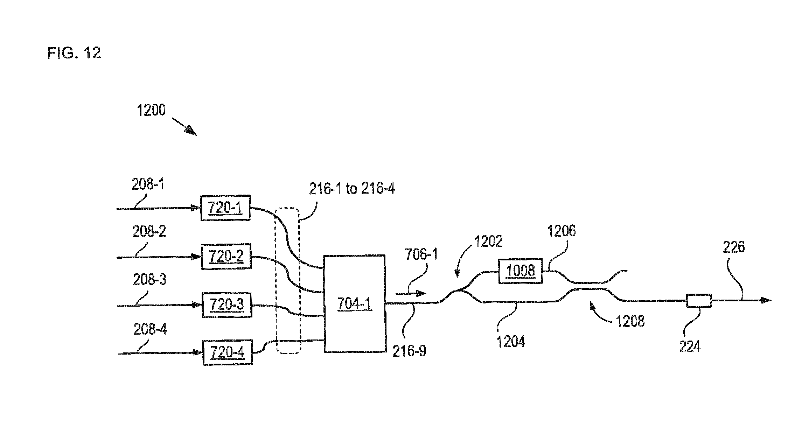

FIG. 12 depicts a schematic drawing of a beam combiner in accordance with a sixth alternative embodiment of the present invention. Beam combiner **1200** comprises input ports **720-1** through **720-4,** mixing region **704-1,** distributor **1202,** polarization rotator **1008,** directional coupler **1208,** and output port **224.**

As described above and with respect to FIG. 7, light signals **208-1** through **208-4** are received at input ports **720-1** through **720-4** and combined in mixing region **704-1** to form composite output signal **706-1.** Composite output signal **706-1** is a TE-polarized multicolor light signal.

Distributor **1202** comprises an achromatic switch, such as an asymmetric y-junction switch, a cascaded Mach-Zehnder Interferometer-based switch, and the like. At distributor **1202,** composite output signal **706-1** is alternately switched between waveguide portions **1204** and **1206** during the first and second halves of a timeslot allocated for illumination of each image pixel in display region **108.** While propagating through waveguide portion **1206,** the polarization mode of composite output signal **706-1** is rotated from TE to TM at polarization rotator **1008.**

Directional coupler **1208** comprises an achromatic directional coupler that is dimensioned and arranged to couple all of the light in TM-polarized composite output signal **706-1** back into waveguide **216-9** while keeping all of the light in TE-polarized composite output signal **706-1** in waveguide **216-9.** As a result during each time slot, output signal contains both polarizations of the light signal intended to illuminate its corresponding image pixel.

By virtue of distributor **1202,** polarization rotator **1206,** and directional coupler **1208,** beam combiner **1200** enables projection of two oppositely polarized images to be displayed in display region **108** with only half the number of light sources required for projector **200** and light engine **700** and only a single polarization rotator, as compared to the eight required for input stage **1000** as shown in FIG. 10. In addition, the use of a single polarization rotator located after a mixing region obviates waveguide crossovers, which are inherently required in input stages such as input stage **1000.**

In some embodiments, beam combiner **1200** receives TM-polarized light signals and polarization rotator **1206** rotates the polarization from TM to TE. In some embodiments, directional coupler **1208** is not included and waveguides **1204** and **1206** collectively define output port **224,** such as is discussed above and with respect to FIG. 7.

It should noted that beam combiner **1200** does not include power controllers to control the intensity of light signals **208** in output **226.** As a result, the intensity of each of light signals **208** is controlled via direct modulation. In some embodiments, however, power controllers are used, as discussed above. In embodiments of the present invention wherein direct modulation is used to control the intensities of light signals **208** and/or **210,** power monitors, such as power monitor **404** are included to provide a feedback signal for the light signal intensity.

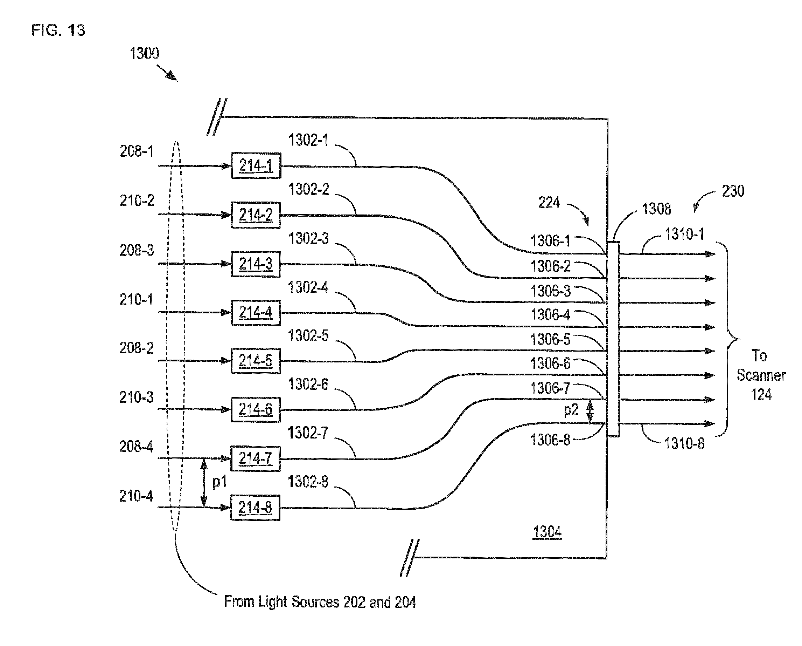

FIG. 13 depicts a schematic drawing of a beam combiner in accordance with a seventh alternative embodiment of the present invention. Beam combiner **1300** comprises waveguides **1302-1** through **1302-8,** which are formed on substrate **1304** to collectively define a planar lightwave circuit. Beam combiner receives light signals **208** from light sources **202** and **204** at input ports **720.** In some embodiments, beam combiner **1300** comprises power controllers **722.**

Light sources **202** and **204** are arranged in a linear array having pitch, **p1.** The size of **p1** is determined by the minimum spacing on which the light sources can be located without introducing optical and/or electrical cross talk, parasitic electrical effects, thermal management issues, and handling problems. In some embodiments, light sources **202** and **204** are provided as a monolithically integrated laser diode array having pitch **p1.**

ports **720** are arranged in a linear array having a pitch, **p1,** which substantially matches the pitch of light sources **202** and **204.**

Waveguides **1302-1** through **1302-8** (referred to, collectively, as waveguides **1302)** are analogous to waveguides **216.** Waveguides **1302** convey each of light signals **208** and **210** from input ports **720** to output facets **1306-1** through **1306-8** (referred to, collectively, as output facets **1306).** Output facets **1306** collectively define output port **224.** At output port **224,** output facets **1306** are arranged in a linear array having a pitch, **p2,** which is typically within the range from approximately 5 microns to approximately 15 microns, and typically less than or equal to 10 microns.

Output port **224** is optically coupled with lenslet array **1308,** which comprises a plurality of lenses for collimating light signals **208** and **210** and providing them as substantially parallel, individual light beams **1310-1** through **1310-8.** Light beams **1310-1** through **1310-8** collectively define output **230.** In some embodiments light signals **208** and **210** are collimated using a single lens.

Because the run-out distance between output facet **1308-1** and **1308-8** is as large as 70-80 microns, when output **230** is scanned over displayer region **108,** the resultant 3D image is susceptible to the same optical problems discussed above and with respect to FIG. 7, such as aliasing, ghosting, smearing, *etc.* As a result, optional operation **306** of method **300** is suitable for use with this embodiment of the invention as well. As a result of operation **306,** the sequence and timing of the data signals that control the intensity of each light signal is controlled to mitigate these optical effects and substantially co-locate the two polarized images on display region **108.** For example, if the scan rate of scanner **134** results in each output beam **1310** "trailing" its predecessor across display region **108** by 10 microseconds, the data signals used to control the intensities of light signals **208** and **210** are adjusted by 10 microseconds to correct this displacement.

It is a further aspect of the present invention that by appropriately controlling the sequencing and timing of the data signals used to control light signals **208** and **210,** beam combiner **1300** can be eliminated all together, as long as scanner **134** is large enough and fast enough to accommodate the separation of light signals **208** and **210** as they are provided by sources **202** and **204** and still produce an image at suitable video rates.

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A projector comprising:
a beam combiner comprising a plurality of waveguides that are monolithically integrated, the plurality of waveguides being arranged to define;
a first plurality of input ports that are physically adapted to receive a first plurality of light signals having a first polarization;
a second plurality of input ports that are physically adapted to receive a second plurality of light signals having a second polarization;
a first mixing region; and
an output port, the output port providing an output signal comprising the first plurality of light signals and the second plurality of light signals; and
a scanner that receives the output signal and scans it over a display region.

2. The projector of claim 1 further comprising:
a plurality of light sources that provide a third plurality of light signals having the first polarization;
a plurality of splitters that distribute each of the third plurality of light signals into one of the first plurality of light signals and one of a fourth plurality of light signals; and
a first plurality of converters, wherein each of the first plurality of converters receives one of the fourth plurality of light signals, converts it from the first polarization to the second polarization, and provides it as one of the second plurality of light signals.

3. The projector of claim 1 wherein the output signal comprises (1) a first composite light signal that includes the first plurality of light signals and (2) a second composite light signal that comprises the second plurality of light signals.

4. The projector of claim 3 wherein the output port comprises a first output waveguide and a second output waveguide, the first output waveguide conveying the first composite light signal and the second output waveguide conveying the second composite light signal.

5. The projector of claim 4 wherein the first mixing region comprises a first waveguide portion that has a first refractive-index contrast, and wherein the first output waveguide comprises a second waveguide portion that is **characterized by** a second refractive-index contrast that is higher than the first refractive-index contrast.

6. The projector of claim 1 wherein the first mixing region comprises (1) a second mixing region that includes the first plurality of input ports and (2) a third mixing region that includes the second plurality of input ports, wherein the second mixing region is dimensioned and arranged to combine the first plurality of light signals into a first composite output signal and the third mixing region is dimensioned and arranged to combine the second plurality of light signals into a second composite output signal.

7. The projector of claim 6 wherein the first mixing region comprises a fourth mixing region that is dimensioned and arranged to combine the first composite output signal and the second composite output signal into a third composite output signal, and wherein the output signals is based on the third composite output signal.

8. The projector of claim 1 wherein the first mixing region comprises a second mixing region that includes the first plurality of input ports and the second plurality of input ports, and wherein the second mixing region is dimensioned and arranged to combine the first plurality of light signals and the second plurality of light signals into a first composite output signal, and further wherein the output signals is based on the first composite output signal.

9. The projector of claim 1 wherein the beam combiner further comprising an attenuator, the attenuator being dimensioned and arranged to control the amount of optical energy of one of the first plurality of light signals in the output signal, wherein the plurality of waveguides are further arranged to define the attenuator.

10. The projector of claim 1 further comprising a first light source that is physically adapted to provide one of the first plurality of light signals, wherein the first light source is **characterized by** an output optical mode, and wherein a first input port of the first plurality of input ports comprises a mode-matching region that includes a facet having an optical mode that is substantially matched to the output optical mode.

11. A method comprising:
receiving a first plurality of light signals at a first plurality of input ports of a beam combiner, wherein the first plurality of light signals are polarized with a first polarization, and wherein the beam combiner comprises a first planar lightwave circuit that includes the first plurality of input ports, a second plurality of input ports, and an output port;
receiving a second plurality of light signals at the second plurality of input ports, wherein the second plurality of light signals are polarized with a second polarization;
providing an output signal at the output port, wherein the output signal comprises the first plurality of light signals and the second plurality of light signals; and
scanning the output signal over a display region.

12. The method of claim 11 further comprising:
providing the beam combiner such that the first planar lightwave circuit further comprises a first mixing region and a second mixing region;
combining the first plurality of light signals in the first mixing region to provide a first composite output signal;
combining the second plurality of light signals in the second mixing region to provide a second composite output signal; and
providing the output signal such that it includes the first composite output signal and the second composite output signal.

13. The method of claim 12 further comprising:
providing the first composite output signal at a first output facet, wherein the output port comprises the first output facet;
providing a first output beam by substantially collimating the first composite output signal;
providing the second composite output signal at a second output facet, wherein the output port comprises the second output facet; and
providing a second output beam by substantially collimating the second composite output signal;
wherein the output signal comprises the first output beam and the second output beam.

14. The method of claim 12 further comprising:
providing the beam combiner such that the first planar lightwave circuit further comprises a third mixing region;
combining the first composite output signal and the second composite output signal in the third mixing region to provide a third composite output signal;
providing the output signal such that it includes the third composite output signal; and
providing an output beam by substantially collimating the third composite output signal;
wherein the output signal comprises the third output beam.

15. The method of claim 11 further comprising:
providing a first set of data based on a desired illumination of a first image pixel in the display region;
providing a first set of control signals that control the intensities of each of the first plurality of light signals, wherein the first set of control signals are based on the first set of data, and wherein the first set of control signals are provided at a first time, t0; and
providing a second set of control signals that control the intensities of each of the second plurality of light signals, wherein the second set of control signals are based on the first set of data, and wherein the second set of control signals are provided at a second time, t0+□t, where the magnitude of □t is based on the scan rate at which the output signal is scanned over the display region.
